# EUROPÄISCHE PATENTSCHRIFT

(11) **EP 1 318 907 B1**
(45) Veröffentlichungstag und Bekanntmachung des Hinweises auf die Patenterteilung: **25.01.2006**
(21) Anmeldenummer: 01969731.7
(22) Anmeldetag: 18.09.2001
(51) Int. Cl.: B32B 27/10, B32B 37/18, B44C 5/04

(54) **SCHICHTVERBUNDMATERIAL MIT UNTERSCHIEDLICH VORGEHÄRTETEN HARZSCHICHTEN**
LAYERED COMPOSITE MATERIAL COMPRISING VARIOUS PRE-HARDENED RESIN LAYERS
MATERIAU COMPOSITE STRATIFIE PRESENTANT DES COUCHES EN RESINE DIFFEREMMENT PRECUITES

(30) Priorität: 22.09.2000 DE 10046877
(43) Veröffentlichungstag der Anmeldung: 18.06.2003
(73) Patentinhaber: Basell Poliolefine Italia S.r.l., 20124 Milano (IT)
(72) Erfinder: MÜLLER, Klaus, 65843 Sulbach (DE); KLEMM, Klaus, 97656 Oberelsbach (DE)
(86) Internationale Anmeldenummer: PCT/EP2001/010760
(87) Internationale Veröffentlichungsnummer: WO 2002/024447

(56) Entgegenhaltungen:
- WO-A-01/03927
- WO-A-97/23550
- DE-A- 19 858 173
- DE-A- 19 927 549

## Beschreibung

Die vorliegende Erfindung betrifft ein Schichtverbundmaterial, enthaltend einen Träger aus einem thermoplastischen Polymeren, eine darauf angeordnete Zwischenlage aus ebenfalls einem thermoplastischen Polymeren und eine auf der Zwischenlage aufgebrachte hitzegehärtete Schicht, wobei zwischen dem Träger und der Zwischenlage noch eine Harzschicht (a) mit einem Aushärtungsgrad von mindestens 20 % und zwischen der Zwischenlage und der hitzegehärteten Schicht eine Harzschicht (c) mit einem Aushärtungsgrad von mindestens 60 % eingebracht wird.

Weiterhin betrifft die vorliegende Erfindung ein Verfahren zur Herstellung dieses Schichtverbundmaterials und dessen Verwendung zur Herstellung von Möbeln, Fußbodenbelägen, Wandpaneelen, Haushaltsgeräten oder von Formkörpern in der Elektro-, Bau- oder Automobilindustrie.

Die bisher bekannten Schichtverbundmaterialien, welche insbesondere in der Möbel- oder in der Haushaltsgeräteindustrie eingesetzt werden, bestehen im wesentlichen aus einer Trägerschicht aus Holz oder Holzfasern oder aus unter Harzzusatz verpreßten Einzelpapieren, auf die unter Einwirkung von Hitze und Druck Dekorschichten sowie weitere hitzegehärtete Schichten, sogenannte Overlays, aufgebracht werden. Die dabei verwendeten Dekorschichten weisen häufig Holz-, Metall- oder Marmormaserungen auf. Die Dekorschichten werden in vielen Fällen zusammen mit den auf ihnen aufgebrachten hitzegehärteten Schichten als sogenannte Laminate verwendet.

Derartige Schichtverbundmaterialien weisen indes den Nachteil auf, daß sie eine gewisse Empfindlichkeit gegenüber von den Rändern her in die Kernschicht eindringender Feuchtigkeit aufweisen, weil sowohl Holz, als auch Holzfasern oder Einzelpapiere unter dem Einfluß von Feuchtigkeit zum Aufquellen neigen. Weiterhin lassen sich derartige Schichtverbundmaterialien nur mit relativ hohem Aufwand verformen.

Für zahlreiche industrielle Anwendungen, beispielsweise in der Automobil- oder Elektroindustrie benötigt man als Oberflächenmaterialien Werkstoffe, die einerseits eine hohe Druckfestigkeit und andererseits eine relativ hohe'Temperaturbeständigkeit aufweisen und sich darüber hinaus gut dekorativ ausgestalten lassen sollten.

In der Möbelherstellung werden schon seit längerem Oberflächenmaterialien eingesetzt, wobei mehrere Schichten, u.a. eine Trägerschicht, eine Dekorschicht und eine darauf aufliegende hitzegehärtete Schicht, mit Hilfe von weiteren Verbundschichten, beispielsweise aus Papier oder aus Klebefolien, ein dekoratives Schichtverbundmaterial ergeben. Ein derartiges Schichtverbundmaterial ist jedoch sehr aufwendig herzustellen, weist oft einen hohen Formaldehydanteil auf und zeigt ein ungünstiges Quellverhalten.

Aus der DE-A 197 22 339 ist ein Schichtverbundmaterial bekannt, welches eine Trägerschicht aus Polypropylen, eine darauf angeordnete Dekorschicht und eine auf der Dekorschicht aufgebrachte hitzegehärtete Schicht enthält. Weiterhin beschreibt die DE-A 198 58 173 ein Schichtverbundmaterial aus einer Trägerschicht verschiedener anderer thermoplastischer Polymerer, wie zum Beispiel aus bestimmten Copolymeren des Styrols oder aus Polyoxymethylen bzw. aus Polybutylenterephthalat, sowie einer darauf aufgebrachten Dekorschicht und einer auf dieser aufliegenden hitzegehärteten Schicht. Derartige Schichtverbundmaterialien aus einer Trägerschicht aus thermoplastischen Polymeren zeichnen sich gegenüber herkömmlichen Schichtverbundmaterialien mit Trägerschichten aus Holz, Holzfasern oder Papier u.a. durch eine hohe Temperatur- und Feuchtigkeitsbeständigkeit, bessere mechanische Festigkeit und eine leichtere Verarbeitbarkeit aus. Aufgrund einer gewissen Steifigkeit und Sprödigkeit der einzelnen polymeren Schichten zeigen aber auch die aus der DE-A 197 22 339 und der DE-A 198 58 173 bekannten Schichtverbundmaterialien noch gewisse Nachteile beim Verarbeiten und Verformen, insbesondere beim dreidimensionalen Verformen zu Bauteilen für den Automobil-, den Haushalts- oder den Elektrobereich.

Gegenstand der DE-A 199 27 549 ist ein Schichtverbundmaterial aus einem Träger aus einem thermoplastischen Polymeren, einer darauf angeordneten Zwischenlage und einer auf der Zwischenlage aufgebrachten hitzegehärteten Schicht, wobei die Zwischenlage aus einem thermoplastischen Kunststoff als Verbundmaterial besteht. Das in dieser Offenlegungsschrift beschriebene Schichtverbundmaterial ist sehr gut verformbar und weist u. a. eine hohe mechanische Stabilität auf.

Die bisher bekannten Schichtverbundmaterialien weisen aber den Nachteil auf, daß beim Herstellungsvorgang der volle Aushärtungsgrad der vorausgehärteten Schichten d. h. der hitzegehärteten Schichten an der kälteren Werkzeugseite erst deutlich später erreicht wird als an der heißeren Werkzeugseite, an der sich das Trägermaterial befindet, da die für den Aushärtungsvorgang erforderliche Wärmemenge erst durch Wärmeleitung vom Träger aus in Richtung auf die hitzegehärtete Schicht übertragen werden muß. Dies hat eine deutliche Verlängerung des Herstellungsprozesses zur Folge, um eine völlige Aushärtung der Oberfläche des Schichtverbundmaterials, an der sich die hitzegehärtete Schicht befindet, zu gewährleisten. Die hierfür erforderliche Aushärtungszeit läßt sich bei den genannten Schichtverbundmaterialien nur dann verkürzen, wenn man bereits ausgehärtete Schichten einsetzt, was allerdings zu einer geringeren Verformbarkeit der Schichtverbundmaterialien führen würde.

Der vorliegenden Erfindung lag daher die Aufgabe zugrunde, den geschilderten Nachteilen abzuhelfen und ein verbessertes Schichtverbundmaterial bereitzustellen, welches u.a. eine hohe Steifigkeit und Schlagzähigkeit aufweist, sich durch eine gute Oberflächenqualität auszeichnet und darüber hinaus insbesondere an der Oberfläche schneller und leichter aushärtbar und zugleich noch im Inneren verformbar ist.

Demgemäß wurde ein verbessertes Schichtverbundmaterial gefunden, enthaltend einen Träger aus einem thermoplastischen Polymeren, eine darauf angeordnete Zwischenlage aus ebenfalls einem thermoplastischen Polymeren und eine auf der Zwischenlage aufgebrachte hitzegehärtete Schicht, wobei zwischen dem Träger und der Zwischenlage noch eine Harzschicht (a) mit einem Aushärtungsgrad von mindestens 20 % und zwischen der Zwischenlage und der hitzegehärteten Schicht eine Harzschicht (c) mit einem Aushärtungsgrad von mindestens 60 % eingebracht wird.

Nach einer Abwandlung des erfindungsgemäßen Schichtverbundmaterials kann dieses zwischen der Zwischenlage und der Harzschicht (c) mit einem Aushärtungsgrad von mindestens 60 % noch eine auf der Zwischenlage angeordnete Harzschicht (b) mit einem Aushärtungsgrad von mindestens 20 % und auf dieser Harzschicht (b) noch eine Dekorschicht enthalten.

Weiterhin kann es sich empfehlen, die einzelnen Harzschichten so auszuwählen, daß der Aushärtungsgrad der einzelnen Harzschichten (a), gegebenenfalls (b) und (c) vom Träger aus in Richtung auf die hitzegehärtete Schicht ansteigt. Unter dem Aushärtungsgrad versteht man dabei den durch Härtung der Harze erreichbaren Grad der maximalen Festigkeit und Stabilität, welcher auch mit der Reaktivität des Harzes korreliert.

Das Material des Trägers kann 1 bis 60, vorzugsweise 5 bis 50, besonders bevorzugt 10 bis 40 Gew.-%, bezogen auf das Gesamtgewicht des Trägers, an verstärkenden Füllstoffen enthalten, wie zum Beispiel Bariumsulfat, Magnesiumhydroxyd, Talkum mit einer mittleren Korngröße im Bereich von 0,1 bis 10 µm, gemessen nach DIN 66 115, Holz, Flachs, Kreide, Glasfasern, beschichtete Glasfasern, Lang- oder Kurzglasfasern, Glaskugeln oder Mischungen von diesen. Außerdem kann man dem Material des Trägers noch die üblichen Zusatzstoffe wie Licht-, UV- und Wärmestabilisatoren, Pigmente, Ruße, Gleitmittel, Flammschutzmittel, Treibmittel und dergleichen in den üblichen und erforderlichen Mengen hinzufügen.

Als thermoplastische Polymere, die den Träger bilden, kommen u.a. Polypropylen, Polyethylen, Polyvinylchlorid, Polysulfone, Polyetherketone, Polyester, Polycycloolefine, Polyacrylate und Polymethacrylate, Polyamide, Polycarbonat, Polyurethane, Polyacetale wie zum Beispiel Polyoxymethylen, Polybutylenterephthalate und Polystyrole in Betracht. Dabei sind sowohl Homopolymere als auch Copolymere dieser thermoplastischen Polymere verwendbar. Vorzugsweise besteht die Trägerschicht neben den verstärkenden Füllstoffen noch aus Polypropylen, Polyoxymethylen, Polybutylenterephthalat oder aus Polystyrol, insbesondere aus Copolymeren des Styrols mit untergeordneten Anteilen an einem oder mehreren Comonomeren wie zum Beispiel Butadien, α-Methylstyrol, Acrylnitril, Vinylcarbazol sowie Estern der Acryl-, Methacryl- oder Itaconsäure. Der Träger des erfindungsgemäßen Schichtverbundmaterials kann auch Rezyklate aus diesen thermoplastischen Polymeren enthalten.

Unter der Bezeichnung Polyoxymethylen sollen dabei Homo- und Copolymere von Aldehyden, beispielsweise von Formaldehyd, und von cyclischen Acetalen verstanden werden, die wiederkehrende Kohlenstoff-Sauerstoff-Bindungen im Molekül enthalten und eine Schmelzflußrate (MFR), nach ISO 1133, bei 230°C und unter einem Gewicht von 2,16 kg, von 5 bis 40 g/10 min., insbesondere von 5 bis 30 g/10 min. aufweisen.

Das bevorzugt verwendete Polybutylenterephthalat ist ein höhermolekulares Veresterungsprodukt von Terephthalsäure mit Butylenglykol und einer Schmelzflußrate (MFR), nach ISO 1133, bei 230°C und unter einem Gewicht von 2,16 kg, von 5 bis 50 g/10 min., insbesondere von 5 bis 30 g/10 min.

Als Copolymere des Styrols kommen insbesondere Copolymere mit bis zu 45 Gew.-%, vorzugsweise mit bis zu 20 Gew.-% an einpolymerisiertem Acrylnitril in Betracht. Derartige Copolymere aus Styrol und Acrylnitril (SAN) weisen eine Schmelzflußrate (MFR), nach ISO 1133, bei 230°C und unter einem Gewicht von 2,16 kg, von 1 bis 25 g/10 min., insbesondere von 4 bis 20 g/10 min. auf.

Weitere ebenfalls bevorzugt eingesetzte Copolymere des Styrols enthalten bis zu 35 Gew. -%, insbesondere bis zu 20 Gew. -% einpolymerisiertes Acrylnitril und bis zu 35 Gew.-%, insbesondere bis zu 30 Gew.-% einpolymerisiertes Butadien. Die Schmelzflußrate derartiger Copolymere aus Styrol, Acrylnitril und Butadien (ABS), nach ISO 1133, bei 230°C und unter einem Gewicht von 2,16 kg, liegt im Bereich von 1 bis 40 g/10 min., insbesondere im Bereich von 2 bis 30 g/10 min.

Als Materialien für den Träger werden insbesondere auch Polyolefine wie Polyethylen oder Polypropylen eingesetzt, wobei letzteres bevorzugt verwendet wird. Unter der Bezeichnung Polypropylen sollen dabei sowohl Homo- als auch Copolymere des Propylens verstanden werden. Copolymere des Propylens enthalten in untergeordneten Mengen mit Propylen copolymerisierbare Monomere, beispielsweise C₂-C₈-Alk-1-ene wie u.a. Ethylen, But-1-en, Pent-1-en oder Hex-1-en. Es können auch zwei oder mehr verschiedene Comonomere verwendet werden.

Besonders geeignete Trägermaterialien sind u.a. Homopolymere des Propylens oder Copolymere des Propylens mit bis zu 50 Gew.-% einpolymerisierter anderer Alk-1-ene mit bis zu 8 C-Atomen. Die Copolymere des Propylens sind hierbei statistische Copolymere oder Block- oder Impactcopolymere. Sofern die Copolymere des Propylens statistisch aufgebaut sind, enthalten sie im allgemeinen bis zu 15 Gew.-%, bevorzugt bis zu 6 Gew.-%, andere Alk-1-ene mit bis zu 8 C-Atomen, insbesondere Ethylen, But-1-en oder ein Gemisch aus Ethylen und But-1-en.

Block- oder Impactcopolymere des Propylens sind Polymere, bei denen man in der ersten Stufe ein Propylenhomopolymer oder ein statistisches Copolymer des Propylens mit bis zu 15 Gew.-%, bevorzugt bis zu 6 Gew.-%, anderer Alk-1-ene mit bis zu 8 C-Atomen herstellt und dann in der zweiten Stufe ein Propylen-Ethylen-Copolymer mit Ethylengehalten von 15 bis 80 Gew.-%, wobei das Propylen-Ethylen-Copolymer zusätzlich noch weitere C₄-Cₐ-Alk-1-ene enthalten kann, hinzupolymerisiert. In der Regel wird soviel des Propylen-Ethylen-Copolymer hinzupolymerisiert, daß das in der zweiten Stufe erzeugte Copolymer im Endprodukt einen Anteil von 3 bis 60 Gew-% aufweist.

Die Polymerisation zur Herstellung von Polypropylen kann mittels eines Ziegler-Natta-Katalysatorsystems erfolgen. Dabei werden insbesondere solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen.

Es können aber auch Katalysatorsysteme auf der Basis von Metallocenverbindungen bzw. auf der Basis von polymerisationsaktiven Metallkomplexen eingesetzt werden.

Im speziellen enthalten übliche Ziegler-Natta-Katalysatorsysteme eine titanhaltige Feststoffkomponente u.a. Halogenide oder Alkohole des drei- oder vierwertigen Titans, ferner eine halogenhaltige Magnesiumverbindung, anorganische Oxide wie zum Beispiel Kieselgel als Träger sowie Elektronendonorverbindungen. Als solche kommen insbesondere Carbonsäurederivate sowie Ketone, Ether, Alkohole oder siliciumorganische Verbindungen in Frage.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 4 857 613 und der US-A 5 288 824 beschrieben. Bevorzugt wird das aus der DE-A 195 29 240 bekannte Verfahren angewandt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können.

Anstelle von Ziegler-Natta-Katalysatorsysteme können auch Metallocenverbindungen bzw. polymerisationsaktive Metallkomplexe zur Herstellung von Polypropylen verwendet werden.

Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben. Für einen Einsatz zur Herstellung von Polypropylen liegen die Metallocenkomplexe im Katalysatorsystem in der Regel geträgert vor. Als Träger werden häufig anorganische Oxide eingesetzt, es können aber auch organische Träger in Form von Polymeren, beispielsweise Polyolefine Verwendung finden. Bevorzugt sind die oben beschriebenen anorganischen Oxide, die auch zur Herstellung der titanhaltigen Feststoffkomponente a) verwendet werden.

Üblicherweise eingesetzte Metallocene enthalten als Zentralatome Titan, Zirkonium oder Hafnium, wobei Zirkonium bevorzugt ist. Im allgemeinen ist das Zentralatom über eine π-Bindung an mindestens eine, in der Regel substituierte, Cyclopentadienylgruppe sowie an weitere Substituenten gebunden. Die weiteren Substituenten können Halogene, Wasserstoff oder organische Reste sein, wobei Fluor, Chlor, Brom, oder Jod oder eine C₁-C₁₀-Alkylgruppe bevorzugt sind. Die Cyclopentadienylgruppe kann auch Bestandteil eines entsprechenden heteroaromatischen Systems sein.

Bevorzugte Metallocene enthalten Zentralatome, die über zwei gleichartige oder verschiedene π-Bindungen an zwei substituierte Cyclopentadienylgruppen gebunden sind, wobei diejenigen besonders bevorzugt sind, in denen Substituenten der Cyclopentadienylgruppen an beide Cyclopentadienylgruppen gebunden sind. Insbesondere sind Komplexe bevorzugt, deren substituierte oder unsubstituierte Cyclopentadienylgruppen zusätzlich durch cyclische Gruppen an zwei benachbarten C-Atomen substituiert sind, wobei die cyclischen Gruppen auch in einem heteroaromatischen System integriert sein können.

Bevorzugte Metallocene sind auch solche, die nur eine substituierte oder unsubstituierte Cyclopentadienylgruppe enthalten, die jedoch mit mindestens einem Rest substituiert ist, der auch an das Zentralatom gebunden ist.

Geeignete Metallocenverbindungen sind beispielsweise
Ethylenbis(indenyl)-zirkoniumdichlorid,
Ethylenbis(tetrahydroindenyl)-zirkoniumdichlorid,
Diphenylmethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiyl(2-methyl-4-azapentalen) (2-methyl-4 (4'-methylphenyl) -indenyl) -zirkoniumdichlorid,
Dimethylsilandiyl (2-methyl-4-thiapentalen) (2-ethyl-4 (4'-tert. butylphenyl)-indenyl)-zirkoniumdichlorid,
Ethandiyl(2-ethyl-4-azapentalen) (2-ethyl-4 (4' -tert.butylphenyl) -indenyl)-zirköniumdichlorid,
Dimethylsilandiylbis(2-methyl-4-azapentalen)-zirkoniumdichlorid,
Dimethylsilandiylbis (2-methyl-4-thiapentalen)-zirkoniumdichlorid -
Dimethylsilandiylbis(-2-methylindenyl)-zirkoniumdichlorid,
Dimethylsilandiylbis(-2-methylbenzindenyl)-zirkoniumdichlorid
Dimethylsilandiylbis(-2-methyl-4-phenylindenyl)zirkoniumdichlorid,
Dimethylsilandiylbis(-2-methyl-4-naphthylindenyl)zirkoniumdichlorid,
Dimethylsilandiylbis(-2-methyl-4-isopropylindenyl)zirkoniumdichlorid oder
Dimethylsilandiylbis(-2-methyl-4,6-diisopropylindenyl)zirkoniumdichlorid sowie die entsprechenden Dimethylzirkoniumverbindungen.

Die Metallocenverbindungen sind entweder bekannt oder nach an sich bekannten Methoden erhältlich. Zur Katalyse können auch Mischungen derartiger Metallocenverbindungen eingesetzt werden, ferner die in der EP-A 416 815 beschriebenen Metallocenkomplexe.

Weiterhin enthalten die Metallocen-Katalysatorsysteme metalloceniumionenbildende Verbindungen. Geeignet sind starke, neutrale Lewissäuren, ionische Verbindungen mit lewissauren Kationen oder ionische Verbindungen mit Brönsted-Säuren als Kation. Beispiele sind hierfür Tris(pentafluorphenyl)boran, Tetrakis(pentafluorophenyl)borat oder Salze des N,N-Dimethylaniliniums. Ebenfalls geeignet als metalloceniumionenbildende Verbindungen sind offenkettige oder cyclische Alumoxanverbindungen. Diese werden üblicherweise durch Umsetzung von Trialkylaluminium mit Wasser hergestellt und liegen in der Regel als Gemische unterschiedlich langer, sowohl linearer als auch cyclischer Kettenmoleküle vor.

Darüber hinaus können die Metallocen-Katalysatorsysteme metallorganische Verbindungen der Metalle der I., II. oder III. Hauptgruppe des Periodensystems enthalten wie n-Butyl-Lithium, n-Butyl-n-octyl-Magnesium oder Tri-iso-butyl-aluminium, Triethylaluminium oder Trimethylaluminium.

Die Herstellung der für die Trägerschicht verwendeten Polypropylene wird durch Polymerisation in wenigstens einer, häufig auch in zwei oder noch mehr hintereinandergeschalteten Reaktionszonen (Reaktorkaskade), in der Gasphase, in einer Suspension oder in einer flüssigen Phase (Bulkphase) durchgeführt. Es können die üblichen, für die Polymerisation von C₂-C₈-Alk-1-enen verwendeten Reaktoren eingesetzt werden. Geeignete Reaktoren sind u.a. kontinuierlich betriebene Rührkessel, Schleifenreaktoren oder Wirbel-bettreaktoren. Die Größe der Reaktoren ist hierbei nicht von wesentlicher Bedeutung. Sie richtet sich nach dem Ausstoß, der in der oder in den einzelnen Reaktionszonen erzielt werden soll.

Als Reaktoren werden insbesondere Wirbelbettreaktoren sowie horizontal oder vertikal gerührte Pulverbettreaktoren verwendet. Das Reaktionsbett besteht im allgemeinen aus dem Polymerisat aus C₂-C₈-Alk-1-enen, das im jeweiligen Reaktor polymerisiert wird.

Die Polymerisation zur Herstellung der als Trägerschichten verwendeten Polypropylene wird unter üblichen Reaktionsbedingungen bei Temperaturen von 40 bis 120°C, insbesondere von 50 bis 100°C und Drücken von 10 bis 100 bar, insbesondere von 20 bis 50 bar vorgenommen.

Die als Träger verwendeten Polypropylene weisen in der Regel eine Schmelzflußrate (MFR), nach ISO 1133, von 0,1 bis 200 g/10 min., insbesondere von 0,2 bis 100 g/10 min., bei 230°C und unter einem Gewicht von 2,16 kg, auf.

Als Träger können im erfindungsgemäßen Schichtverbundmaterial auch Blends, d.h. Mischungen unterschiedlicher thermoplastischer Polymerer verwendet werden, beispielsweise Blends aus einem Copolymeren des Styrols mit Acrylnitril und einem Copolymeren aus Butadien und Acrylnitril.

Erfindungsgemäß enthält das Schichtverbundmaterial zwischen dem Träger und der Zwischenlage eine Harzschicht (a) mit einem Aushärtungsgrad von mindestens 20 %, insbesondere von mindestens 30 % und besonders bevorzugt von mindestens 40 %. In der Harzschicht (a) können die in der Kunststofftechnik gebräuchlichen Harze eingesetzt werden. Dazu zählen u.a. Acrylharze, Phenolharze, Harnstoffharze oder Melaminharze. Vorzugsweise werden für die Harzschicht (a) insbesondere Phenolharze oder Harnstoffharze verwendet. Die Harzschicht (a) weist vorzugsweise einen Grad der Beharzung von 50 % bis 300 %, insbesondere von 100 % bis 250 % und eine Dicke von 0,001 bis 1,0 mm, insbesondere von 0,01 bis 0,08 mm auf.

Auf die Harzschicht (a) kommt beim erfindungsgemäßen Schichtverbundmaterial als zwischenlage noch eine Schicht aus einem thermoplastischen Kunststoff als Verbundmaterial, vorzugsweise aus dem gleichen thermoplastischen Kunststoff wie der Träger, wodurch sich die Haftung zwischen Träger und Zwischenlage besonders verbessert. Die Zwischenlage liegt insbesondere als dünne Folie oder aber als dünnes Vlies oder Gewebe mit einer Dicke von 0,001 bis 1,0 mm, insbesondere von 0,005 bis 0,3 mm vor. Als Materialien für die Zwischenlage kommen die gleichen thermoplastischen Kunststoffe in Frage, wie sie bereits für die Träger beschrieben sind, also insbesondere Polypropylen und Polyethylen, Polymere des Styrols, Polyoxymethylen oder Polybutylenterephthalat.

Als Zwischenlage kann auch ein mit Harz getränktes Vlies oder Gewebe oder eine mit Harz getränkte Folie aus einem thermoplastischen Kunststoff verwendet werden. Als Harze finden hierfür insbesondere Acrylatharze, Phenolharze, Harnstoffharze oder Melaminharze Verwendung. Der Grad der Beharzung kann dabei bis zu 300 % betragen, was bedeutet, daß praktisch die gesamte Oberfläche der Zwischenlage mehrfach mit Harz bedeckt ist. Vorzugsweise liegt der Grad der Beharzung bei 50 bis 150 %, insbesondere bei 80 bis 120 %. Das Gewicht der Zwischenlage pro m² liegt im Bereich von 15 bis 150 g, insbesondere im Bereich von 30 bis 60 g.

Das erfindungsgemäße Schichtverbundmaterial kann nach einer bevorzugten Ausgestaltung zwischen der Zwischenlage und der Harzschicht (c) mit einem Aushärtungsgrad von mindestens 60 % noch eine auf der Zwischenlage angeordnete Harzschicht (b) mit einem Aushärtungsgrad von mindestens 20 % und auf dieser Harzschicht (b) noch eine Dekorschicht enthalten.

Die Harzschicht (b) weist einen Aushärtungsgrad von mindestens 20 %, insbesondere von mindestens 40 % und besonders bevorzugt von mindestens 60 % auf. In der Harzschicht (b) können ebenfalls die in der Kunststofftechnik gebräuchlichen Harze eingesetzt werden. Dazu zählen u.a. Acrylharze, Phenolharze, Harnstoffharze oder Melaminharze. Vorzugsweise werden für die Harzschicht (b) insbesondere Phenolharze oder Harnstoffharze verwendet. Die Harzschicht b) weist vorzugsweise eine Dicke von 0,001 bis 1,0 mm, insbesondere von 0,01 bis 0,08 mm auf. Der Beharzungsgrad der Harzschicht b) liegt vorzugsweise bei 50 % bis 300 %, insbesondere bei 100 % bis 300 %.

Die Dekorschicht kann aus einem Kunststoffmaterial bestehen, das eine Prägung oder eine Färbung oder beides in Kombination aufweist, beispielsweise in Form eines Fertiglaminates. Die Dekorschicht kann aber auch aus Papier oder aus einem Gewebe oder einem papierähnlichen oder gewebeähnlichen oder holzähnlichen oder metallähnlichen Material aufgebaut sein. Beispiele hierfür wären Dekorschichten aus einem aluminiumartigen Material oder aus einem edelstahlartigen Material oder aber aus leder-, seide-, holz-, kork- oder linoleumartigen Material. Die Dekorschicht kann ebenfalls mit Acryl-, Phenol, Harnstoff- oder Melaminharzen beharzt sein, wobei der Grad der Beharzung bei 50 bis 300 %, insbesondere bei 100 bis 300 %, bezogen auf das Gewicht der Dekorschicht, liegen kann. Das Gewicht der Dekorschicht liegt üblicherweise im Bereich von 10 bis 200 g pro m², insbesondere im Bereich von 25 bis 150 g pro m² und besonders bevorzugt im Bereich von 50 bis 130 g pro m².

Weiterhin enthält das erfindungsgemäße Schichtverbundmaterial entweder auf der Zwischenlage oder aber auf der Dekorschicht noch eine Harzschicht (c) mit einem Aushärtungsgrad von mindestens 60 %, insbesondere von mindestens 80 % und besonders bevorzugt von mindestens 90 %. In der Harzschicht (c) können die in der Kunststofftechnik gebräuchlichen Harze verwendet werden, u.a. Acrylharze, Phenolharze, Harnstoffharze oder Melaminharze. Vorzugsweise werden in der Harzschicht (c) insbesondere Melaminharze oder Acrylharze eingesetzt. Die Harzschicht (c) weist eine Dicke von vorzugsweise 0,001 bis 1,0 mm, insbesondere von 0,01 bis 0,8 mm auf. Ihr Beharzungsgrad liegt im allgemeinen bei 50 % bis 300 %, vorzugsweise bei 100 % bis 300 %.

Die auf der Harzschicht (c) angeordnete hitzegehärtete Schicht (Overlay), die die Oberfläche des erfindungsgemäßen Schichtverbundmaterials bildet, besteht vorzugsweise aus einem duroplastischen Kunststoffmaterial, beispielsweise aus einem mit Acrylharz, Phenolharz, Melaminharz oder Harnstoffharz getränktem Papier, das durch Druck- oder Hitzeeinwirkung während der Herstellung des Schichtverbundmaterials vernetzt wird. Das Gewicht der hitzegehärteten Schicht (Overlay) liegt üblicherweise im Bereich von 10 bis 300 g pro m², insbesondere im Bereich von 15 bis 150 g pro m² und besonders bevorzugt im Bereich von 20 bis 70 g pro m².

Die hitzegehärtete Schicht (Overlay) kann auch als Fertiglaminat wahlweise einseitig oder auch beidseitig auf der Harzschicht (c) angeordnet sein. Es ist auch möglich, ein Fertiglaminat auf die Zwischenlage aufzubringen, welches aus der Dekorschicht, der Harzschicht (c) und aus dem Overlay besteht.

Die Gesamtdicke des erfindungsgemäßen Schichtverbundmaterials liegt im Bereich von 1 mm bis 100 mm, vorzugsweise im Bereich von 1 mm bis 20 mm, insbesondere im Bereich von 1,5 bis 10 mm, wobei auf den Träger wenigstens 80 %, vorzugsweise wenigstens 90 % der Gesamtdicke entfallen.

Die Herstellung der erfindungsgemäßen Schichtverbundmaterialien kann nach einem Verfahren erfolgen, bei welchem die Materialien für die Zwischenlage, gegebenenfalls die Dekorschicht und die hitzegehärtete Schicht sowie die Harzschichten (a), gegebenenfalls (b) und (c) jeweils in Form dünner flächiger Gebilde vorgelegt werden und anschließend bei Temperaturen von 150 bis 300°C, insbesondere von 160 bis 280°C, mit dem Material für den Träger verbunden werden. Vorzugsweise können dabei die Zwischenlage, gegebenenfalls die Dekorschicht und die hitzegehärtete Schicht (Overlay) sowie die Harzschichten (a), gegebenenfalls (b) und (c) auch zusammen in Form eines Fertiglaminates eingesetzt werden, welches ebenfalls als flächiges Gebilde vorliegt.

Weiterhin ist es möglich, zuerst die Zwischenlage, gegebenenfalls die Dekorschicht und die hitzegehärtete Schicht sowie die dazwischenliegenden Harzschichten durch Tauchen in ein Klebebad oder durch den Einsatz dünner Klebebänder in einer Presse, vorzugsweise in einer Doppelbandpresse, miteinander zu verbinden und anschließend diesen Verbund auf den Träger aufzubringen. Dabei kann es sich auch empfehlen, den Verbund aus Zwischenlage, gegebenenfalls Dekorschicht und hitzegehärteter Schicht sowie die dazwischenliegenden Harzschichten zunächst durch ein Tiefziehverfahren bzw. eine direkte Verformung, beispielsweise in einem Spritzgußwerkzeug, zweidimensional zu verformen und danach mit dem thermoplastischen Kunststoff, welches den Träger bilden soll, durch Hinterspritzen, Extrudieren, Verschweißen oder thermisches Verpressen zu vereinigen. Falls dabei der Träger und die Zwischenlage aus jeweils identischen thermoplastischen Kunststoffen bestehen, beobachtet man eine sehr hohe Haftung zwischen beiden Schichten.

Das Verfahren zur Herstellung des erfindungsgemäßen Schichtverbundmaterials kann ferner in der Weise abgewandelt werden, daß das Schichtverbundmaterial nach vorangegangener Wärmebehandlung bei Temperaturen von 150 bis 300°C, insbesondere von 150 bis 250°C und besonders bevorzugt von 160 bis 200°C dreidimensional verformt wird. Auf diese Weise lassen sich u.a. Formkörper für die Elektro-, die Bau- oder Automobilindustrie herstellen.

Das erfindungsgemäße Schichtverbundmaterial ist ferner in der Weise herstellbar, daß das Verbinden der hitzegehärteten Schicht mit der Zwischenlage, gegebenenfalls der Dekorschicht und dem Träger sowie den dazwischen liegenden Harzschichten (a), gegebenenfalls (b) und (c) durch übliche Verarbeitungsverfahren in der Kunststoffindustrie durchgeführt wird. Übliche Verarbeitungsverfahren sind hierbei u.a. das Spritzgießen, die Extrusion, das Verschweißen oder das thermische Verpressen der einzelnen Schichten.

Beim Spritzgießen werden die einzelnen Schichten, also der Träger, die Zwischenlage, gegebenenfalls die Dekorschicht und die hitzegehärtete Schicht sowie die dazwischen liegenden Harzschichten (a), gegebenenfalls (b) und (c) entweder direkt über ein Tiefziehverfahren vorgeformt und anschließend in einem Spritzgußwerkzeug miteinander hinterspritzt, oder aber direkt erst im Spritzgußwerkzeug miteinander verformt und hinterspritzt. Dies kann sowohl einseitig als auch beidseitig geschehen, wobei im letzteren Fall die zwischenlage, gegebenenfalls die Dekorschicht, die hitzegehärtete Schicht sowie die dazwischen liegenden Harzschichten (a), gegebenenfalls (b) und (c) auf beiden Seiten des Trägers angeordnet sind. Dieser Spritzgußvorgang erfolgt üblicherweise bei Temperaturen von 150 bis 300°C, insbesondere von 180 bis 280°C, bevorzugt von 190 bis 270°C und Drücken von 50 bis 100 N/cm², insbesondere von 60 bis 80 N/cm². Durch die im Spritzgußwerkzeug auftretenden Temperaturen und Drücke erreicht man nicht nur eine sehr gute Verbindung der einzelnen Schichten untereinander, sondern auch eine weitere Aushärtung des erfindungsgemäßen Schichtverbundmaterials. Dieses ist gegenüber den bisher bekannten Schichtverbundmaterialien sehr flexibel und läßt sich in weiteren Verarbeitungsschritten gut verformen.

Beim Extrusionsverfahren werden die Zwischenlage, gegebenenfalls die Dekorschicht und die hitzegehärtete Schicht sowie die dazwischen liegenden Harzschichten (a), gegebenenfalls (b) und (c), des erfindungsgemäßen Schichtverbundmaterials über temperierte Kalander- oder Prägewalzen dem thermoplastischen Kunststoff des Trägers einseitig oder beidseitig zugeführt (sog. Kaschieren) und auf diese Weise miteinander verbunden. Dabei werden üblicherweise Temperaturen von 150 bis 300°C, insbesondere von 160 bis 250°C, bevorzugt von 170 bis 220°C und Drücke von 40 bis 200 N/cm², insbesondere von 50 bis 100 N/cm² eingestellt. Auf diese Weise erreicht man eine sehr gute Haftung der einzelnen flächigen Gebilde untereinander. Das erhaltene Schichtverbundmaterial weist ferner gute Oberflächeneigenschaften auf.

Eine Variante des Extrusionsverfahren ist das sogenannte Profilextrusionsverfahren, bei dem die einzelnen Schichten des erfindungsgemäßen Schichtverbundmaterials, insbesondere die Zwischenlage über eine Kalibierung so verformt werden, daß diese anschließend dem eigentlichen Profil, d.h. dem Träger aus thermoplastischem Kunststoff, direkt zugeführt werden kann.

Weiterhin ist das erfindungsgemäße Schichtverbundmaterial auch durch thermisches Verpressen der einzelnen Schichten erhältlich, wobei deren Verformung entweder vorab über ein vorgeschaltetes Tiefziehverfahren, oder aber direkt in der Presse erfolgen kann.

Dabei gibt man ein thermoplastisches Kunststoffgranulat direkt auf einen Laminatverbund aus der Zwischenlage, gegebenenfalls der Dekorschicht und der hitzegehärteten Schicht sowie den dazwischen liegenden Harzschichten (a), gegebenenfalls (b) und (c), und verpresst dieses miteinander bei Temperaturen von 150 bis 300°C, insbesondere von 160 bis 250°C, bevorzugt von 170 bis 230°C, Drücken von 50 bis 120 N/cm², insbesondere von 80 bis 100 N/cm² sowie Presszeiten von 0,5 bis 10 min., insbesondere von 1 bis 5 min und besonders bevorzugt von 1 bis 3 min.

Daneben kann das erfindungsgemäße Schichtverbundmaterial auch noch durch Verschweißen der einzelnen Schichten, also des Trägermaterials, der Zwischenlage, gegebenenfalls der Dekorschicht und der hitzegehärteten Schicht sowie den dazwischen liegenden Harzschichten (a), gegebenenfalls (b) und (c) hergestellt werden. Mögliche Verschweißtechniken sind dabei u.a. das Ultraschallschweißen, das Warmgasschweißen, das Vibrationsschweißen oder das Orbitalschweißen. Dabei werden die einzelnen Schichten als flächige Gebilde vorgelegt und bei Temperaturen von 150 bis 300°C, insbesondere bei Temperaturen von 170 bis 280°C miteinander verbunden.

Die auf diese Weise erhaltenen Schichtverbundmaterialien können auch an ihrer Oberfläche eingefärbt werden.

Die erfindungsgemäßen Schichtverbundmaterialien zeichnen sich u.a. durch gute mechanische Eigenschaften aufgrund der guten Haftung zwischen den einzelnen Schichten aus. Sie sind zwei- oder dreidimensional gut verformbar und weisen ferner eine hohe Resistenz gegenüber hohen Temperaturen oder Chemikalien und eine hohe Oberflächenqualität durch gezielte Auswahl der verwendeten Harzschichten auf.

Aufgrund des unterschiedlichen Aushärtungsgrades der einzelnen Harzschichten (a) gegebenenfalls (b) und (c), wobei die innere Harzschicht (a) weniger stark ausgehärtet ist als die nachfolgenden Harzschichten (c) und gegebenenfalls (b), ist es möglich, die Aushärtungszeit deutlich zu senken, ohne daß dabei die möglichst vollständige Aushärtung der Oberfläche des erfindungsgemäßen Schichtverbundmaterials erschwert wird. Dies ist u.a. darauf zurückzuführen, daß die nur teilweise ausgehärteten Harzschichten (a) und gegebenenfalls (b) im unteren Bereich des Schichtverbundmaterials einen guten Wärmetransport von der wärmeren Werkzeugseite hin zur kälteren Werkzeugseite ermöglichen. Weiterhin sind die erfindungsgemäßen Schichtverbundmaterialien aufgrund ihres speziellen Aufbaus gut verformbar.

Die erfindungsgemäßen Schichtverbundmaterialien eignen sich u.a. zur Herstellung von Möbeln, Fußbodenbelägen, Wandpaneelen, Haushaltsgeräten oder von Formkörpern in der Elektro-, Bau- oder der Automobilindustrie.

Im nachfolgenden Beispiel soll die Erfindung noch näher erläutert werden.

### Beispiel

Ein Verbund aus verschiedenen Schichten wurde in einem Spritzgußwerkzeug mit der hitzegehärteten Schicht auswerferseitig eingelegt. Der Verbund bestand aus einem zu 60 % ausgehärteten Harnstoffharz als Harzschicht (a) mit einem Beharzungsgrad von 250 % einer darauf liegenden Zwischenlage aus einem Vlies aus einem mit Metallocenkatalysatoren hergestellten Polypropylen mit einem Schmelzpunkt von ca. 135°C und einem Gewicht von 30 g/m², einer darauf angeordneten Harzschicht b) aus einem Phenolharz mit einem Beharzungsgrad von 300 %, welches zu 60 % ausgehärtet war, einer auf der Harzschicht (b) liegenden Dekorschicht aus einer bedruckten thermoplastischen Folie aus einem mit Metallocenkatalysatoren hergestellten Polypropylen mit einem Gewicht von 25 g/m², einer Harzschicht (c), aus einem zu 85 % ausgehärteten Melaminharz mit einem Beharzungsgrad von 300 % und einer hitzegehärteten Schicht (Overlay) aus einem mit Melaminharz getränktem Papier, mit einem Gewicht von 30 g/m² und einem Aushärtungsgrad von ebenfalls 85 %.

Im Spritzgußwerkzeug wurde dieser Verbund bei einer Temperatur von 260°C mit einer Schmelze aus einem mit Metallocenkatalysatoren hergestellten Propylenhomopolymer über einen Zeitraum von 0,03 Minuten angespritzt. Das Propylenhomopolymer wies eine Schmelzflußrate (MFR), nach ISO 1133, von 20 g/10 min., bei 230°C und 2, 16 kg auf. Das Propylenhomopolymer bildete dabei das Material für den Träger.

Durch die unterschiedlichen Aushärtungsgrade der Harze und der dort herrschenden Massetemperatur von 260°C werden die Harzkombinationen aktiviert, d.h. das mit Harnstoffharz getränkte Vlies mit einem Aushärtungsgrad von 60 % bekommt die volle Temperatur von 260°C mit.

Aufgrund des unterschiedlichen Aushärtungsgrades der einzelnen Harzschichten weist das so erhältliche Schichtverbundmaterial ein günstiges Verzugsverhalten gegenüber dem thermoplastischen Kunststoff auf. Weiterhin zeichnet sich das erhaltene Schichtverbundmaterial durch eine gegenüber den bisher bekannten Schichtverbundmaterialien um etwa 10 % gesteigerte Schlagzähigkeit und Steifigkeit aus.

## Patentansprüche

1. Schichtverbundmaterial, enthaltend einen Träger aus einem thermoplastischen Polymeren, eine darauf angeordnete Zwischenlage aus ebenfalls einem thermoplastischen Polymeren und eine auf der Zwischenlage aufgebrachte hitzegehärtete Schicht, wobei zwischen dem Träger und der Zwischenlage noch eine Harzschicht (a) mit einem Aushärtungsgrad von mindestens 20 % und zwischen der Zwischenlage und der hitzegehärteten Schicht eine Harzschicht (c) mit einem Aushärtungsgrad von mindestens 60 % eingebracht wird.

2. Schichtverbundmaterial nach Anspruch 1, wobei zwischen der Zwischenlage und der Harzschicht (c) mit einem Aushärtungsgrad von mindestens 60 % noch eine auf der Zwischenlage angeordnete Harzschicht (b) mit einem Aushärtungsgrad von mindestens 20 % und auf dieser Harzschicht (b) noch eine Dekorschicht aufgebracht wird.

3. Schichtverbundmaterial nach einem der Ansprüche 1 und 2, wobei der Aushärtungsgrad der einzelnen Harzschichten (a), gegebenenfalls (b) und (c) vom Träger in Richtung auf die hitzegehärte Schicht hin ansteigt.

4. Schichtverbundmaterial nach einem der Ansprüche 1 bis 3, wobei der Aushärtungsgrad der Harzschicht (a) mindestens 30 %, gegebenenfalls der Aushärtungsgrad der Harzschicht (b) mindestens 40 % und der Aushärtungsgrad der Harzschicht (c) mindestens 80 % beträgt.

5. Schichtverbundmaterial nach einem der Ansprüche 1 bis 4, wobei der Träger aus Polypropylen als thermoplastisches Polymeres besteht.

6. Schichtverbundmaterial nach einem der Ansprüche 1 bis 5, wobei die Zwischenlage aus einem mit Harz getränktem Vlies aus thermoplastischem Kunststoff besteht.

7. Schichtverbundmaterial nach einem der Ansprüche 1 bis 6, wobei die Harzschichten (a) und (b) aus einem Harnstoffharz oder einem Phenolharz bestehen.

8. Schichtverbundmaterial nach einem der Ansprüche 1 bis 7, wobei die Harzschicht (c) aus einem Melaminharz oder einem Acrylharz besteht.

9. Verfahren zur Herstellung eines Schichtverbundmaterials aüsgehend von einem Material gemäß einem der Ansprüche 1 bis 8, **dadurch gekennzeichnet, daß** die Materialien für die Zwischenlage, gegebenenfalls die Dekorschicht und die hitzegehärtete Schicht sowie für die Harzschichten (a), gegebenenfalls (b) und (c), jeweils in Form dünner, flächiger Gebilde vorgelegt werden und anschließend bei Temperaturen von 150 bis 300°C mit dem Träger verbunden werden.

10. verfahren gemäß Anspruch 9, **dadurch gekennzeichnet, daß** das Verbinden der einzelnen Harzschichten (a), gegebenenfalls (b), und (c), mit dem Träger, der Zwischenlage, gegebenenfalls der Dekorschicht und der hitzegehärteten Schicht durch Spritzgießen erfolgt.

11. verfahren gemäß Anspruch 9, **dadurch gekennzeichnet, daß** das Verbinden der einzelnen Harzschichten (a), gegebenenfalls (b) und (c) mit dem Träger, der Zwischenlage, gegebenenfalls der Dekorschicht und der hitzegehärteten Schicht durch Extrusion erfolgt.

12. verfahren gemäß Anspruch 9, **dadurch gekennzeichnet, daß** das verbinden der einzelnen Harzschichten (a), gegebenenfalls (b), und (c) mit dem Träger, der Zwischenlage, gegebenenfalls der Dekorschicht und der hitzegehärteten Schicht durch thermischen Verpressen erfolgt.

13. Verfahren gemäß Anspruch 9, **dadurch gekennzeichnet, daß** das Verbinden der einzelnen Harzschichten (a), gegebenenfalls (b), und (c) mit dem Träger, der Zwischenlage, gegebenenfalls der Dekorschicht und der hitzegehärteten Schicht durch Verschweißen erfolgt.

14. Verwendung des Schichtverbundmaterials hergestellt nach einem Verfahren gemäß den Ansprüchen 9 bis 13 zur Herstellung von Möbeln, Fußbodenbelägen, Wandpaneelen, Haushaltsgeräten oder von Formkörpern in der Elektro-, Bau- oder Automobilindustrie.

## Claims

1. A laminated composite comprising a support made of a thermoplastic polymer, an intermediate layer located thereon which is likewise made of a thermoplastic polymer and a heat-cured layer applied to the intermediate layer, wherein a resin layer (a) having a degree of curing of at least 20% is additionally inserted between the support and the intermediate layer and a resin layer (c) having a degree of curing of at least 60% is inserted between the intermediate layer and the heat-cured layer.

2. The laminated composite according to claim 1, wherein a resin layer (b) located on the intermediate layer and having a degree of curing of at least 20% is additionally inserted between the intermediate layer and the resin layer (c) having a degree of curing of at least 60% and an additional decorative layer is applied to this resin layer (b).

3. The laminated composite according to claim 1 or 2, wherein the degree of curing of the individual resin layers (a), (b) if present and (c) increases from the support in the direction of the heat-cured layer.

4. The laminated composite according to any of claims 1 to 3, wherein the degree of curing of the resin layer (a) is at least 30%, the degree of curing of any resin layer (b) is at least 40% and the degree of curing of the resin layer (c) is at least 80%.

5. The laminated composite according to any of claims 1 to 4, wherein the support comprises polypropylene as thermoplastic polymer.

6. The laminated composite according to any of claims 1 to 5, wherein the intermediate layer comprises a resin-impregnated nonwoven made of a thermoplastic.

7. The laminated composite according to any of claims 1 to 6, wherein the resin layers (a) and (b) comprise a urea resin or a phenolic resin.

8. The laminated composite according to any of claims 1 to 7, wherein the resin layer (c) comprises a melamine resin or an acrylic resin.

9. A process for producing a laminated composite starting from a composite according to any of claims 1 to 8, which comprises providing the materials for the intermediate layer, if appropriate the decorative layer and the heat-cured layer and for the resin layers (a), if appropriate (b) and (c), in each case in the form of thin sheets and subsequently joining them to the support at from 150 to 300°C.

10. The process according to claim 9, wherein the individual resin layers (a), if appropriate (b) and (c) are joined to the support, the intermediate layer, if appropriate the decorative layer and the heat-cured layer by injection molding.

11. The process according to claim 9, wherein the individual resin layers (a), if appropriate (b) and (c) are joined to the support, the intermediate layer, if appropriate the decorative layer and the heat-cured layer by extrusion.

12. The process according to claim 9, wherein the individual resin layers (a), if appropriate (b) and (c) are joined to the support, the intermediate layer, if appropriate the decorative layer and the heat-cured layer by hot pressing.

13. The process according to claim 9, wherein the individual resin layers (a), if appropriate (b) and (c) are joined to the support, the intermediate layer, if appropriate the decorative layer and the heat-cured layer by welding.

14. The use of a laminated composite prepared by a process according to any of claims 9 to 13 for producing furniture, floor coverings, wall panels, household appliances or moldings in the electrical, building or automobile industry.

## Revendications

1. Matériau composite stratifié contenant un support en polymère thermoplastique, une couche intermédiaire disposée sur celui-ci, constituée également d'un polymère thermoplastique et une couche thermodurcie disposée sur la couche intermédiaire, une autre couche de résine (a) présentant un degré de dureté d'au moins 20 % étant placée entre le support et la couche intermédiaire et une couche de résine (c) présentant un degré de dureté d'au moins 60 % étant placée entre la couche intermédiaire et la couche thermodurcie.

2. Matériau composite stratifié selon la revendication 1, dans lequel entre la couche intermédiaire et la couche de résine (c) présentant un degré de dureté d'au moins 60 % sont rapportées encore une couche de résine (b) présentant un degré de dureté d'au moins 20 % disposée sur la couche intermédiaire et encore une couche de décor sur cette couche de résine (b).

3. Matériau composite stratifié selon l'une quelconque des revendications 1 et 2, dans lequel le degré de dureté des couches de résine individuelles (a), éventuellement (b) et (c) augmente à partir du support dans la direction de la couche thermodurcie.

4. Matériau composite stratifié selon l'une quelconque des revendications 1 à 3, dans lequel le degré de dureté de la couche de résine (a) est d'au moins 30 %, éventuellement le degré de dureté de la couche de résine (b) étant d'au moins 40 % et le degré de dureté de la couche de résine (c) étant d'au moins 80 %.

5. Matériau composite stratifié selon l'une quelconque des revendications 1 à 4, dans lequel le support est constitué de polypropylène en tant que polymère thermoplastique.

6. Matériau composite stratifié selon l'une quelconque des revendications 1 à 5, dans lequel la couche intermédiaire est constituée d'un feutre imbibé de résine en matière thermoplastique.

7. Matériau composite stratifié selon l'une quelconque des revendications 1 à 6, dans lequel les couches de résine (a) et (b) sont constituées d'une résine uréique ou phénolique.

8. Matériau composite stratifié selon l'une quelconque des revendications 1 à 7, dans lequel la couche de résine (c) est constituée d'une résine de mélamine ou d'une résine acrylique.

9. Procédé de fabrication d'un matériau composite stratifié constitué d'un matériau selon l'une quelconque des revendications 1 à 8, **caractérisé en ce que** les matériaux pour la couche intermédiaire, éventuellement la couche de décor et la couche thermodurcie ainsi que pour les couches de résine (a), éventuellement (b) et (c) sont respectivement disposés sous la forme d'ensemble mince et plat et sont reliés ensuite au support à des températures de 150 à 300° C.

10. Procédé selon la revendication 9, **caractérisé en ce que** la liaison des couches individuelles de résine (a), éventuellement (b) et (c), avec le support, la couche intermédiaire, éventuellement la couche de décor et la couche thermodurcie, s'effectue par moulage par pulvérisation.

11. Procédé selon la revendication 9, **caractérisé en ce que** la liaison des couches individuelles de résine (a), éventuellement (b) et (c) avec le support, la couche intermédiaire, éventuellement la couche de décor et la couche thermodurcie s'effectue par extrusion.

12. Procédé selon la revendication 9, **caractérisé en ce que** la liaison des couches individuelles de résine (a), éventuellement (b) et (c) avec le support, la couche intermédiaire, éventuellement la couche de décor et la couche thermodurcie s'effectue par compression thermique.

13. Procédé selon la revendication 9, **caractérisé en ce que** la liaison des couches individuelles de résine (a), éventuellement (b) et (c) avec le support, la couche intermédiaire, éventuellement la couche de décor et la couche thermodurcie s'effectue par soudage.

14. Utilisation du matériau composite stratifié produit par un procédé selon les revendications 9 à 13, pour la fabrication de meubles, de revêtement de sol, de panneaux muraux, d'appareils domestiques ou de corps formés dans l'industrie électronique, dans la construction ou dans l'industrie automobile.
